(19) Europäisches Patentamt
European Patent Office
Office européen des brevets

(11) EP 4 625 379 A1

(12) **EUROPEAN PATENT APPLICATION**
published in accordance with Art. 153(4) EPC

(43) Date of publication:
**01.10.2025 Bulletin 2025/40**

(21) Application number: **22968531.8**

(22) Date of filing: **16.12.2022**

(51) International Patent Classification (IPC):
***G08B 13/181*** *(2006.01)*

(52) Cooperative Patent Classification (CPC):
**G08B 13/181**

(86) International application number:
**PCT/JP2022/046333**

(87) International publication number:
**WO 2024/127621 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Optex Co., Ltd.**
**Otsu-shi, Shiga 520-0101 (JP)**

(72) Inventors:
- **SONE, Fumikatsu**
**Otsu-shi, Shiga 520-0101 (JP)**
- **IKEDA, Hiroyuki**
**Otsu-shi, Shiga 520-0101 (JP)**
- **KONDO, Takashi**
**Otsu-shi, Shiga 520-0101 (JP)**
- **SANETO, Hiroshi**
**Otsu-shi, Shiga 520-0101 (JP)**

(74) Representative: **Patentanwaltskanzlei WILHELM & BECK**
**Prinzenstraße 13**
**80639 München (DE)**

(54) **SECURITY SENSOR UNIT, SECURITY SENSOR UNIT CONTROL METHOD, CONTROL PROGRAM, AND RECORDING MEDIUM**

(57) A security sensor unit (1) includes: a millimeter wave sensor section (10); an object classification section (20) that classifies a contour of an object in a detection area; a motion classification section (30) that classifies a motion of the object; an alarming determination section (40) that determines whether to activate an alarm by using results given by the object classification section (20) and the motion classification section (30); and an alarming section (50) that activates an alarm.

FIG. 1

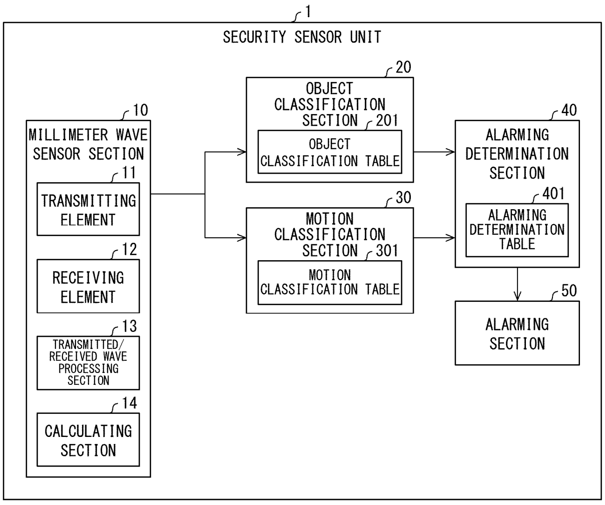




Processed by Luminess, 75001 PARIS (FR)

## Description

### Technical Field

The present invention relates to a security sensor unit and the like each detecting a moving body which moves in a given area.

### Background Art

Conventionally, there has been known a mechanical security system. The mechanical security system is configured such that, when an intruder appears in a preset area, an intrusion alarm sensor detects the intruder and activates an alarm. However, there is no such a perfect mechanical security system that certainly detects a subject which is desired to be detected but certainly does not detect a subject which is not desired to be detected. Thus, a possibility of a false alarm or an alarm failure cannot be denied. For example, the intrusion alarm sensor detects even a small animal or the like, such as a pet animal. Generally, however, the pet animal or the like is not a subject to be alarmed, and thus it is not necessary to activate an alarm therefor. In view of this, such a mechanism is required that does not activate an alarm even when a small animal is detected.

In order to deal with this, Patent Literature 1 discloses a detection system which uses an infrared sensor and a radar in combination. Patent Literature 2 discloses a passive infrared type human body sensing device which includes two sensor units arranged in an up-down direction and which outputs a detection signal when outputs from the two sensor units exceed a prescribed level. Patent Literature 3 discloses a laser scanning sensor which determines, on the basis of (a) a height and a width of an object detected by using a laser beam and (b) a period of the detection, whether or not the detected object is a human body. Patent Literature 4 discloses a security sensor system which is configured to output an alarm signal in response to reception of a detection signal from a sensor part and which includes a transmitter attached to a pet animal and is further configured not to output an alarm signal even in response to reception of a detection signal if the detection signal is a signal from the transmitter attached to the pet animal.

### Citation List

[Patent Literature]

[Patent Literature 1]
Specification of U.S. Patent No. 11,079,482
[Patent Literature 2]
Japanese Patent No. 3086406
[Patent Literature 3]
Japanese Patent Application Publication, Tokukai, No. 2013-61187
[Patent Literature 4]
Japanese Patent Application Publication, Tokukaihei, No. H11-154286 (1999)

## Summary of Invention

### Technical Problem

Even the technique disclosed in the above-described Patent Literature 1 still has a possibility of a false alarm or an alarm failure. It may be difficult to eliminate the possibility of a false alarm or an alarm failure; however, there is room for improvement for further reducing the possibility of a false alarm or an alarm failure.

An aspect of the present invention was made in view of the above problem, and has an objective to provide a security sensor unit having a less possibility of a false alarm or an alarm failure.

### Solution to Problem

In order to attain the above objective, a security sensor unit in accordance with an aspect of the present invention is a security sensor unit which detects an object having entered a detection area and activates an alarm, the security sensor unit including: a millimeter wave sensor section; an object classification section which classifies a contour of the object in the detection area, the contour having been derived by using an output from the millimeter wave sensor section; a motion classification section which classifies a motion of the object, the motion having been derived by using an output from the millimeter wave sensor section; an alarming determination section which determines, by using classification results given by the object classification section and the motion classification section, whether to activate an alarm; and an alarming section which activates an alarm in accordance with a result given by the alarming determination section.

In order to attain the above objective, a method, in accordance with an aspect of the present invention, for controlling a security sensor unit is a method for controlling a security sensor unit which detects an object having entered a detection area and activates an alarm, the security sensor unit including a millimeter wave sensor section, the method including: an object classification step of classifying a contour of the object in the detection area, the contour having been derived by using an output from the millimeter wave sensor section; a motion classification step of classifying a motion of the object, the motion having been derived by using an output from the millimeter wave sensor section; an alarming determination step of determining, by using results obtained in the object classification step and the motion classification step, whether to activate an alarm; and an alarming step of activating an alarm in accordance with a result obtained in the alarming determination step.

## Advantageous Effects of Invention

In accordance with an aspect of the present invention, it is possible to provide such a configuration that does not activate an alarm in a case where a false alarm occurs conventionally and which activates an alarm in a case where an alarm failure occurs conventionally. Therefore, it is possible to reduce occurrence of a false alarm or an alarm failure than in a conventional configuration.

## Brief Description of Drawings

Fig. 1 is a functional block diagram illustrating a configuration of a main part of a security sensor unit in accordance with an embodiment of the present invention.
Fig. 2 is a view illustrating a contour of a subject when an object classification section in the security sensor unit carries out classification.
Fig. 3 is a view illustrating an example of an object classification table, a motion classification table, and an alarming determination table which are to be used by the security sensor unit.
Fig. 4 shows example cases for indicating, among cases where the object classification table, the motion classification table, and the alarming determination table shown in Fig. 3 are used, cases where an alarm is activated and cases where an alarm is not activated.
Fig. 5 is a flowchart illustrating a flow of a process carried out by the security sensor unit.
Fig. 6 is a view illustrating another example of an object classification table, a motion classification table, and an alarming determination table which are to be used by the security sensor unit.
Fig. 7 shows example cases for indicating, among cases where the object classification table, the motion classification table, and the alarming determination table shown in Fig. 6 are used, cases where an alarm is activated and cases where an alarm is not activated.
Fig. 8 is a functional block diagram illustrating a configuration of a main part of a security sensor unit in accordance with another embodiment of the present invention.
Fig. 9 is a view illustrating an example of a detection area of a security sensor unit.
Fig. 10 is a functional block diagram illustrating a configuration of a main part of a security sensor unit in accordance with further another embodiment of the present invention.

## Description of Embodiments

### Embodiment 1

The following description will discuss details of an embodiment of the present invention. A security sensor unit 1 in accordance with the present embodiment is used as a security sensor. That is, the security sensor unit 1 detects an object having entered a detection area, and activates an alarm.

First, the following will describe, with reference to Fig. 1, a configuration of the security sensor unit 1. Fig. 1 is a functional block diagram illustrating a configuration of a main part of the security sensor unit 1. As shown in Fig. 1, the security sensor unit 1 includes a millimeter wave sensor section 10, an object classification section 20, a motion classification section 30, an alarming determination section 40, and an alarming section 50.

### Millimeter Wave Sensor Section 10

The millimeter wave sensor section 10 detects an object in a detection area by using so-called millimeter waves (radio waves in a frequency band of approximately 30 GHz to approximately 300 GHz), and outputs a distance to the detected object, an angle made by the millimeter wave sensor section 10 and the object (hereinafter, such an angle will sometimes be referred to as an "angle of the object"), a speed of the object, and a radar cross section (RCS) of the object.

The millimeter wave sensor section 10 is constituted by, for example, one or more transmitting elements 11, two or more receiving elements 12, a transmitted / received wave processing section 13 which processes transmitted/received waves, and a calculating section 14 which calculates, by using the transmitted/received waves, a distance to an object by which the transmitted waves have been reflected, an angle of the object, and a speed of the object. A process carried out by the millimeter wave sensor section 10 for calculating these values can be carried out by using a known technique. Thus, the process will not be described in detail, and will be simply explained as follows.

The transmitting element 11 transmits transmitted electromagnetic waves according to the frequency modulated continuous wave (FMCW) technique. To be more specific, the transmitting element 11 transmits transmitted electromagnetic waves in accordance with a so-called chirp method. In one example, the transmitting element 11 transmits transmitted electromagnetic waves having been modulated so that the frequency changes linearly as the time lapses.

Each of the receiving elements 12 receives reflected electromagnetic waves which are a part of the transmitted electromagnetic waves having been transmitted from the transmitting element 11, the part being reflected by a person, an object, and/or the like (hereinafter, each of which will sometimes be referred to as an "object"). Given that a wavelength of the transmitted electromagnetic waves is expressed by "$\lambda$", the

receiving elements 12 are often arranged at intervals of an integer multiple of $\lambda/2$.

It is known that the number N of the receiving elements 12 and a theoretical angle resolution $\theta$ (rad) are approximated by a relation represented by Formula (1) below.

$$\theta = 2/N \ldots (1)$$

As is clear from Formula (1), as the number N of receiving elements 12 increases, the resolution increases. Therefore, it is preferable that the number of the receiving elements 12 be not less than four.

Further, as discussed above, the receiving elements 12 are often arranged at intervals of an integer multiple of $\lambda/2$. Therefore, as the wavelength of the transmitted electromagnetic waves decreases, in other words, as the frequency thereof increases, the millimeter wave sensor section 10 can be downsized more. Therefore, it is preferable that the frequency of the transmitted electromagnetic waves be not less than 55 GHz.

Further, the calculating section 14 calculates, by using the transmitted electromagnetic waves transmitted from the transmitting element 11 and the reflected electromagnetic waves received by the receiving element 12, a distance between the millimeter wave sensor section 10 and the object and an angle of arrival of the reflected electromagnetic waves (an angle of the object).

To be more specific, the calculating section 14 generates an intermediate frequency signal by mixing, at given time intervals, a signal indicative of the transmitted electromagnetic waves and a signal indicative of the reflected electromagnetic waves. Then, the calculating section 14 generates intermediate frequency signals for the respective plurality of receiving elements 12. Further, the calculating section 14 calculates the distance between the millimeter wave sensor section 10 and the object on the basis of a phase difference between the transmitted electromagnetic waves and the reflected electromagnetic waves which phase difference appears in the intermediate frequency signal thus generated. Moreover, the calculating section 14 calculates the angle of arrival of the reflected electromagnetic waves on the basis of a phase difference between the plurality of intermediate frequency signals having been generated for the respective plurality of receiving elements 12. Furthermore, the calculating section 14 obtains a phase difference between the intermediate frequency signals generated at given time intervals, and calculates a speed of the object by using the phase difference.

Further, the millimeter wave sensor section 10 outputs the distance to the object, the angle of the object, the speed of the object, and the RCS of the object.

The millimeter wave sensor section 10 carries out detection for each of given ranges in the detection area. That is, after the millimeter wave sensor section 10 carries out detection in a certain given range, the millimeter wave sensor section 10 changes a destination of irradiation of transmitted electromagnetic waves from the plurality of transmitting elements 11 so as to carry out detection in another given range. By repeating this process, the millimeter wave sensor section 10 carries out detection in the whole of the detection area. The detection area may be divided into a plurality of sections, e.g., 10 × 10 sections, and the millimeter wave sensor section 10 may carry out detection for each of the sections.

The object classification section 20 classifies the object detected by the millimeter wave sensor section 10, in accordance with a contour of the object. To be more specific, the object classification section 20 includes an object classification table 201 in which contours of objects are classified into a plurality of groups. By using the object classification table 201 and the contour of the object detected by the millimeter wave sensor section 10, the object classification section 20 classifies the contour of the object as a corresponding one of the contours having been classified. For example, the object classification section 20 uses, as the contour of the object, a height and a width of the object as well as the object classification table 201 so as to classify the contour of the object into a corresponding one of the groups of the contours into which the object has been classified. A method for deriving a height and a width of an object, which correspond to a contour of the object, by using an output from the millimeter wave sensor section 10 will be described later.

Information indicated by the distance to the object and the angle of the object output from the millimeter wave sensor section 10 serves as one point in the detection area. Thus, the object classification section 20 connects an outline of such points which are close to each other, and deals with a resultant as a contour of the object. Then, the object classification section 20 classifies the object by using a height and a width of the contour.

The following will describe, with reference to Fig. 2, a method for calculating a contour of an object, that is, a height and a width of the object. Fig. 2 is a view illustrating a method for calculating a height and a width of an object in order to allow the object classification section 20 to carry out the classification process. 2001 of Fig. 2 illustrates a detection area and a part of irradiation positions P irradiated with transmitted electromagnetic waves. For example, in a case where an object M enters the detection area, a part of the transmitted electromagnetic waves emitted to the detection area which part corresponds to the object M hits the object M and is reflected thereby. In 2001 of Fig. 2, points which hit the object M and are reflected thereby are illustrated as black points. 2002 of Fig. 2 illustrates a state in which only the black points are extracted.

In the security sensor unit 1, actual size information is stored in advance, the actual size information indicating a relation between (a) a distance from the millimeter wave sensor section 10 and a difference in angle between arbitrary two points, i.e., two irradiation positions P and (b) an actual length. The actual size information may be the one indicating the correspondence relation in a table or the one indicating a formula for deriving the actual length.

The object classification section 20 uses the actual size information to calculate a height H of the object M by using (a) a difference in angle between, among the black points P, a point P1 and a point P2, which are furthest away from each other in a vertical direction, and (b) a distance between the millimeter wave sensor section 10 and the object M. Further, the object classification section 20 calculates a width W of the object M by using (a) a difference in angle between, among the black points P, a point P3 and a point P4, which are furthest away from each other in a horizontal direction, and (b) the distance between the millimeter wave sensor section 10 and the object M.

By using the height H and the width W thus calculated, the object classification section 20 classifies the object as a corresponding one of the contours. Note that the "height" refers to a vertical length of a subject to be detected and the "width" refers to a horizontal length thereof.

The motion classification section 30 carries out classification of a motion value indicative of a motion of the object detected by the millimeter wave sensor section 10. To be more specific, the motion classification section 30 includes a motion classification table 301 in which motion values are classified into a plurality of ranges. By using the motion classification table 301, the motion classification section 30 classifies the motion value of the object, for example, a speed of the object as a corresponding one of the ranges having been classified.

The alarming determination section 40 determines, by using classification results given by the object classification section 20 and the motion classification section 30, whether to activate an alarm. To be more specific, the alarming determination section 40 includes an alarming determination table 401 in which (a) a relation between the classification result given by the object classification section 20 and the classification result given by the motion classification section 30 and (b) information indicating whether to activate an alarm are associated with each other. By using the alarming determination table 401 as well as the classification result given by the object classification section 20 and the classification result given by the motion classification section 30, the alarming determination section 40 determines whether to activate an alarm.

The alarming section 50 activates an alarm in accordance with the determination made by the alarming determination section 40. The alarming section 50 may activate an alarm by using light, sound, or both of them. Further, the alarming section 50 may operate contact points of a circuit breaker, for example. Moreover, the alarming section 50 may notify another device of an alarming state through data communication and/or the like.

Example 1 of Object Classification Table, Motion Classification Table, and Alarming Determination Table

Next, the following will describe, with reference to Fig. 3, an example of the object classification table 201, the motion classification table 301, and the alarming determination table 401. Fig. 3 illustrates an object classification table 201A, which is one example of the object classification table 201, a motion classification table 301A, which is one example of the motion classification table 301, and an alarming determination table 401A, which is one example of the alarming determination table 401.

In the object classification table 201A, an object having a height of less than 0.5 m and a width of less than 0.75 m is classified as having a contour A, an object having a height of less than 0.5 m and a width of not less than 0.75 m is classified as having a contour B, an object having a height of not less than 0.5 m and less than 1.3 m and a width of not less than 0.75 m and less than 1.3 m is classified as having a contour C, and an object having a height of not less than 1.3 m is classified as having a contour D.

The object classification section 20 classifies, by using the object classification table 201A, an object detected by the millimeter wave sensor section 10 as having the contour A, the contour B, the contour C, or the contour D.

The contour A corresponds to an object having a height of less than 0.5 m and a width of less than 0.75 m. This corresponds to (a) a person lying down viewed from his/her head or his/her foot or (b) a small animal. Thus, in a case where the detected object is classified as having the contour A, it is highly likely that this object is a person lying down or a small animal.

The contour B corresponds to an object having a height of less than 0.5 m and a width of not less than 0.75 m. This corresponds to a person lying down or a slightly larger animal which is larger in a horizontal direction. Thus, in a case where the detected object is classified as having the contour B, it is highly likely that this object is a person lying down or a slightly larger animal which is larger in a horizontal direction.

The contour C corresponds to an object having a height of not less than 0.5 m and less than 1.3 m and a width of not less than 0.75 m and less than 1.3 m. This corresponds to a person who is in a half-sitting posture, that is, a person crouching down a little or a middle-size animal such as a large dog. Thus, in a case where the detected object is classified as having the contour C, it is highly likely that this object is a person who is in a half-sitting posture or a middle-size animal.

The contour D corresponds to an object having a height of not less than 1.3 m. This corresponds to a standing person. Thus, in a case where the detected object is classified as having the contour A, it is highly likely that this object is a standing person.

In the motion classification table 301A, an object having a speed (which serves as a motion value) of less than 0.3 m/s is classified as having a speed A, an object having a speed of not less than 0.3 m/s and less than 2.0 m/s is classified as having a speed B, and an object having a speed of not less than 2.0 m/s is classified as having a speed C.

The motion classification section 30 classifies, by using the motion classification table 301A, an object detected by the millimeter wave sensor section 10 as having the speed A, the speed B, or the speed C.

The speed A corresponds to an object whose speed is less than 0.3 m/s. This is unlikely to be a motion of an animal, and is highly likely to be a motion of a person. Thus, in a case where the detected object is classified as having the speed C, it is highly likely that this object is a person.

The speed B corresponds to an object whose speed is not less than 0.3 m/s and less than 2.0 m/s. This can be considered as a motion of a person or a motion of an animal. Thus, in a case where the detected object is classified as having the speed B, it is highly likely that this object is a person or an animal.

The speed C corresponds to an object whose speed is not less than 2.0 m/s. This can be considered as a motion of a person or a motion of an animal. Thus, in a case where the detected object is classified as having the speed A, it is highly likely that this object is a person or an animal.

In the alarming determination table 401A, classification is made as follows.

(A) In a case where an object is classified as having the contour A, an alarm is activated if the speed thereof is classified as the speed A. Meanwhile, in a case where an object is classified as having the contour A, an alarm is not activated if the speed thereof is classified as the speed B or the speed C (indicated as "x" in Fig. 3).

(B) In a case where an object is classified as having the contour B, an alarm is activated if the speed thereof is classified as the speed A. Meanwhile, in a case where an object is classified as having the contour B, an alarm is not activated if the speed thereof is classified as the speed B or the speed C.

(C) In a case where an object is classified as having the contour C, an alarm is activated when the speed thereof is classified as any one of the speed A, the speed B, and the speed C. Note that whether to activate an alarm may be selected.

(D) In a case where an object is classified as having the contour D, an alarm is activated when the speed thereof is classified as any one of the speed A, the speed B, and the speed C.

By determining whether to activate an alarm in accordance with the above-discussed alarming determination table 401A, the alarming determination section 40 can determine to activate an alarm not only when a motion of a person is an ordinary one but also when a motion of a person is a special one.

For example, when a person is standing upright, a height of the person is approximately 1.5 m to approximately 1.9 m if he/she is an adult. Thus, the object classification section 20 classifies the person as having the contour D. In this case, irrespectively of the classification carried out by the motion classification section 30, the alarming determination section 40 determines to activate an alarm. This can also be expressed as below. That is, since the contour D corresponds to an object having a height of not less than 1.3 m, in a case where the object classification section 20 classifies the height of the object as being not less than 1.3 m (first threshold), the alarming determination section 40 activates an alarm irrespectively of the classification result given by the motion classification section 30.

The following will consider a case where a person is moving by crawling, for example. In this case, it is assumed that a height of the person is less than 0.5 m. Therefore, the object classification section 20 will classify the person as having the contour A or the contour B. Further, it is assumed that a moving speed of the person is quite slow and is less than 0.3 m/s. Therefore, the motion classification section 30 will classify the person as having the speed A. In this case, according to the alarming determination table 401A, it is determined to activate an alarm. This can also be expressed as follows. That is, even in a case where the object classification section 20 classifies an object as having the contour A or the contour B, the alarming determination section 40 determines to activate an alarm, provided that the motion classification section 30 classifies the speed of the object, which speed serves as a motion value of the object, as the speed A which is less than 0.3 m/s (second threshold).

Fig. 4 shows example cases for indicating, among cases where the object classification table 201A, the motion classification table 301A, and the alarming determination table 401A shown in Fig. 3 are used, specific cases where an alarm is activated. Fig. 4 also shows, for reference, whether or not an alarm is activated when a conventional technique is used.

For example, the following will consider a case where a small animal such as a mouse enters the detection area. Generally, a mouse has a low height of approximately 5 cm and a small width of approximately 15 cm. Further, the mouse has a fast moving speed of approximately 2 m/s. When these are applied to the object classification table 201A, the motion classification table 301A, and the alarming determination table 401A, the contour A and the speed C are yielded, and accordingly it is determined not to activate an alarm.

Next, the following will consider a case where a person enters the detection area by crawling. It is assumed that a height of the person who is crawling is approximately 30 cm. When a direction of crawling is a direction extending toward the millimeter wave sensor section 10 or a direction separating away from the millimeter wave sensor section 10, the width of is approximately a width of a human's shoulder, that is, approximately 50 cm. Further, it is assumed that a moving speed thereof is approximately 0.2 m/s. When these are applied to the object classification table 201A, the motion classification table 301A, and the alarming determination table 401A, the contour A and the speed A are yielded, and accordingly it is determined to activate an alarm.

When a direction of crawling is a direction oblique to the millimeter wave sensor section 10 or a transverse direction viewed from the millimeter wave sensor section 10, the width is in a range from a length shorter than a human height to a length slightly longer than the human height, that is, approximately 1.4 m to approximately 2.0 m. In this case, the contour B and the speed A are yielded, it is determined to activate an alarm.

The following will consider a case where a person enters the detection area while crouching down. It is assumed that a height of a person crouching down is approximately 1.2 m to approximately 1.4 m, which is slightly shorter than a human height. Further, since the person crouches down, it is assumed that a width of such a person is approximately 1.0 m, which is slightly longer than a human width. A moving speed thereof is in a range from a slow speed to a slightly faster speed. When these are applied to the object classification table 201A, the motion classification table 301A, and the alarming determination table 401A, the contour C and either of the speed A, B, or C are yielded, and it is determined to activate an alarm. Note that an administrator may be allowed to select whether to activate an alarm when an object is classified as having the contour C. The reason for this is as follows.

For example, in a case where a large dog enters the detection area, a size of the large dog and a size of a person crouching down may be the same or similar. Thus, with the configuration in which an alarm is activated when a person enters the detection area while crouching down, an alarm will also be activated when a large dog enters the detection area. However, for example, in a case where a large dog is a user's pet animal, it may sometimes be undesirable to activate an alarm in response to entry of the large dog. Thus, the user can select not to activate an alarm in such a case. Alternatively, an ID with which the large dog can be identified may be attached to the large dog and an alarm may not be activated only when the detected object is the large dog.

That is, the security sensor unit 1 may be configured such that the administrator is allowed to select, in advance, whether to activate an alarm in a case where the object classification section 20 classifies a height of an object as being not less than 0.5 m (third threshold), which is smaller than the first threshold, and less than 1.3 m (first threshold) and classifies a width of the object as being not less than 0.75 m (fourth threshold) and less than 1.3 m (fifth threshold).

Further, in a case where an adult enters the detection area without any special motion, a height thereof is approximately 1.7 m and is classified as the contour D. Accordingly, an alarm is activated.

Meanwhile, with a conventional technique which does not activate an alarm when an object having entered the detection area is a small animal or the like, an alarm would not be activated also when a person enters the detection area by crawling.

As discussed above, in accordance with this example, even when a person is moving by crawling, it is possible to activate an alarm without causing an alarm failure. Further, in a case of a small animal, the small animal is classified as having the contour A. However, since the small animal moves fast, the small animal is classified as having the speed A or the speed B. Thus, in such a case, an alarm is not activated. Therefore, with the present embodiment, it is also possible to prevent a false alarm, specifically, a situation in which an alarm is activated even with respect to a small animal.

Furthermore, with the present embodiment, it is possible to reduce occurrence of an alarm failure or a false alarm even without using a laser scanning sensor or a camera system, each of which is expensive. Moreover, in a case where a camera is used, there is a possibility of causing a problem in terms of personal information and privacy, which may impose a restriction on an installation place. Meanwhile, the present embodiment is less likely to cause such a problem and has less restriction on the installation place.

Flow of Process

Next, the following will describe, with reference to Fig. 5, a flow of a process in which the security sensor unit 1 carries out a process using the object classification table 201A, the motion classification table 301A, and the alarming determination table 401A. Fig. 5 is a flowchart illustrating a flow of a process carried out by the security sensor unit 1.

As shown in Fig. 5, first, the millimeter wave sensor section 10 of the security sensor unit 1 calculates, from transmitted/received waves, a distance to an object which is a subject, an angle of the object, and a speed of the object (S101). Then, the ページ : 27
object classification section 20 calculates, by using the distance to the object and the angle of the object calculated by the millimeter wave sensor section 10, a contour of the object, that is, a height and a width of the object (S102).

The object classification section 20 classifies, by using the height and the width of the contour of the object, the object as having the contour A, the contour B, or the contour C indicated in the object classification table 201A (S103; object classification step).

Further, the motion classification section 30 classifies, by using the speed of the object, the object as having the speed A, the speed B, or the speed C indicated in the motion classification table 301A (S104;

motion classification step).

The process in step S103 and the process in step S104 are carried out in parallel.

Then, by using the classification result given by the object classification section 20, the classification result given by the motion classification section 30, and the alarming determination table 401A, the alarming determination section 40 determines whether to activate an alarm (S105; alarming determination step). If the alarming determination section 40 determines to activate an alarm (YES in S106), the alarming section 50 activates an alarm (S107; alarming step). Meanwhile, if the alarming determination section 40 determines not to activate an alarm (NO in S106), the process returns to step S101.

Example 2 of Object Classification Table, Motion Classification Table, and Alarming Determination Table

Next, the following will describe, with reference to Fig. 6, another example of the object classification table 201, the motion classification table 301, and the alarming determination table 401. Fig. 6 illustrates an object classification table 201B, which is one example of the object classification table 201, a motion classification table 301B, which is one example of the motion classification table 301, and an alarming determination table 401B, which is one example of the alarming determination table 401.

In the object classification table 201B, an object having a height of less than 0.5 m is classified as having the contour A, and an object having a height of not less than 0.5 m is classified as having the contour B.

The object classification section 20 classifies, by using the object classification table 201B, the object, detected by the millimeter wave sensor section 10, as having the contour A or the contour B.

The contour A corresponds to an object having a height of less than 0.5 m. This is highly likely to be a human. Thus, in a case where the detected object is classified as having the contour A, it is highly likely that this object is a small animal or the like, rather than a person.

The contour B corresponds to an object having a height of not less than 0.5 m (sixth threshold). This corresponds to a standing person. Thus, in a case where the detected object is classified as having the contour B, it is highly likely that this object is a standing person.

Further, in the motion classification table 301B, an object having a stay period (which serves as a motion value) of less than 30 s (seconds) is classified as having a period A, an object having a stay period (i.e., a period in which the object stays in the detection area) of not less than 30 s (seconds) and a standstill period of less than 15 s (seconds) is classified as having a period B, and an object having a stay period of not less than a 30 s (seconds) and a standstill period of not less than 15 s (seconds) is classified as having a period C.

By using the motion classification table 301B, the motion classification section 30 classifies the object, detected by the millimeter wave sensor section 10, as having the period A, the period B, or the period C.

The period A corresponds to an object whose stay period is less than 30 seconds. This means that the period in which the object stays in the detection area is short.

The period B corresponds to an object whose stay period is not less than 30 seconds and standstill period is less than 15 seconds. This means that the object stays in the detection area for a long period without remaining at a certain position.

The period C corresponds to an object whose stay period is not less than 30 seconds and standstill period is not less than 15 seconds. This means that the object stays in the detection area for a long period and remains at a certain position.

In the alarming determination table 401B, classification is carried out as follows.

(A) In a case where an object is classified as having the contour A, an alarm is not activated when the period thereof is classified as any one of the period A, the period B, and the period C.

(B) In a case where an object is classified as having the contour B, an alarm is not activated when the period thereof is classified as the period A.

When the period is classified as the period B, an alarm may be activated or may not be activated according to a selection made by the administrator. In Fig. 6, this case is indicated with the remark "activate activation (selectable)". If the period is classified as the period C, an alarm is activated.

Thanks to the configuration in which the alarming determination section 40 determines whether to activate an alarm according to the above-discussed alarming determination table 401B, the alarming determination section 40 can determine whether to activate an alarm in accordance with a degree of suspiciousness of a person. For example, the following will study a case where the detection area is a place of sales of used cars. In this case, for example, in a case where a small animal is in the detection area, the small animal is classified as having the contour D, and thus an alarm is not activated. Further, in a case where a person is in the detection area, the person is classified as having the contour A. However, if the person is just passing through the place, the person is classified as having the period A, thus an alarm is not activated.

Meanwhile, in a case where an object having a size which can be a human remains in the detection area for not less than 30 seconds and is at a standstill at the same position for not less than 15 seconds, the object is classified as having the period C, and an alarm is activated. In other words, in a case where (a) the object classification section 20 classifies an object as having the contour B and (b) the motion classification section 30 classifies a period, serving as a motion value of the object, in which the object remains in the prescribed detection area (first area) as the period C of not less than 30 seconds (first period), the alarming determination section 40 determines to activate an alarm.

Further, in a case where an object does not remain at the same position buts stays in the detection area for a long time, an alarm may be activated or may not be activated. That is, in a case where an object is not at a standstill at the same position for not less than 15 seconds, the object is classified as having the period B. In this case, determination as to whether to activate an alarm may be made in accordance with a setting made by the administrator. In other words, even in a case where (a) the object classification section 20 classifies an object as having the contour B and (b) the motion classification section 30 classifies a period, serving as a motion value of the object, in which the object stays in the prescribed detection area (first area) as being not less than 30 seconds (first period), the alarming determination section 40 can determine not to activate an alarm, provided that the object classification section 20 classifies a period in which the object is at a standstill in the detection area (first area) as being less than 15 seconds (second period).

Fig. 7 illustrates example cases for indicating, among cases where the object classification table 201B, the motion classification table 301B, and the alarming determination table 401B shown in Fig. 6 are used, specific cases where an alarm is activated. Fig. 7 also shows, for reference, whether or not an alarm is activated when a conventional technique is.

For example, the following will consider cases where a small animal such as a cat enters a place such as a place of sales of used cars or an outdoor parking space, a person is straying into the place, a person is passing through the place, and a suspicious person enters the place.

Generally, a cat has a low height, for example, a height of approximately 30 cm. Further, a stay period and a standstill period of the cat is unsettled (irregular). When these are applied to the object classification table 201B, the motion classification table 301B, and the alarming determination table 401B, the contour A is given as a result, and accordingly it is determined not to activate an alarm, irrespectively of the period.

Next, in a case of the person straying into the place, it is considered that a height thereof is approximately 1.5 m to approximately 1.9 m and is "high". Further, since the person is straying into the place, it is considered that each of a stay period and a standstill period is short and is less than 30 seconds. When these are applied to the object classification table 201B, the motion classification table 301B, and the alarming determination table 401B, the contour B and the period A are given as a result, and accordingly it is determined not to activate an alarm.

In a case of the person just passing through the place, there is a possibility that a stay period thereof is not less than 30 seconds and is long, but a standstill period thereof is considered to be short, specifically, less than 15 seconds. When these are applied to the object classification table 201B, the motion classification table 301B, and the alarming determination table 401B, the contour B and the period B are given as a result, and a selection as to whether to activate an alarm is to be made by the administrator. The reason for this is as follows. That is, if the person is the one just passing through the place, it is not necessary to activate an alarm. Meanwhile, if the person is the one wandering around in the place rather than the one passing through the place, there may be a case where an alarm should be activated. Note that a moving direction of the object may be used to determine whether the person is the one passing through the place or the one wandering around in the place. That is, if the moving direction of the object is fixed, the person may be determined as the one passing through the place. Meanwhile, if the moving direction of the object is not fixed, the person may be determined as the one wandering around in the place.

In contrast to this, in a case of a suspicious person, it is considered that the person is hunting out cars. Thus, a stay period thereof is assumed to be long, specifically, not less than 30 seconds, and a standstill period thereof is also assumed to be long, specifically, not less than 30 seconds. When these are applied to the object classification table 201B, the motion classification table 301B, and the alarming determination table 401B, the contour B and the period C are given as a result, and accordingly it is determined to activate an alarm.

As discussed above, in accordance with this example, an alarm is not activated when a small animal enters the detection area or when a subject is just straying into or passing through the detection area, whereas an alarm is activated when a subject is considered to be suspicious. In this manner, it is possible to activate an alarm appropriately while preventing a false alarm or an alarm failure. For example, in a case of a place such as a place of sales of used cars or an outdoor parking space, there is a possibility that a person may enter and exit the place even outside business hours. Thus, with a configuration in which an alarm is activated every time a person is detected, an unnecessary alarm will be activated frequently. Further, with the conventional technique, there is a possibility that an alarm may be activated with respect to all subjects except for small animals. With the present embodiment, it is possible to reduce an unnecessary alarm and to activate an alarm appropriately.

As discussed above, the security sensor unit 1 in accordance with the present embodiment is the security sensor unit 1 which detects an object having entered a detection area and activates an alarm, the security sensor unit 1 including: the millimeter wave sensor section 10; the object classification section 20 which classifies a contour of the object in the detection area, the contour having been derived by using an output from the millimeter wave sensor section 10; the motion classification section 30 which classifies a motion of the object, the motion having been derived by using an output from the millimeter wave sensor section 10; the alarming determination section 10 which determines, by using results given by the object classification section 20 and the motion classification section 30, whether to activate an alarm; and the alarming section 50 which activates an alarm in accordance with a result given by the alarming determination section 40.

With this configuration, determination of whether to activate an alarm is made in accordance with the contour of the object having entered the detection area and a motion value indicative of the motion of the object. Therefore, it is possible to attentively determine whether to activate an alarm. Consequently, an alarm would not be activated even in a situation in which a false alarm may occur in a conventional configuration. Further, an alarm can be activated even in a situation in which an alarm failure may occur in a conventional configuration. Therefore, it is possible to reduce a false alarm or an alarm failure than in a conventional configuration.

## Embodiment 2

The following description will discuss details of another embodiment of the present invention. For convenience, members which are identical in function to the members described in the foregoing embodiment are given respective identical reference signs, and descriptions of those members are not repeated.

Fig. 8 is a functional block diagram illustrating a configuration of a main part of a security sensor unit 1A in accordance with the present embodiment. In the present embodiment, a detection area setting section 60 is additionally provided to the above-discussed security sensor unit 1.

In the security sensor unit 1A in accordance with the present embodiment, a plurality of detection areas are set, and these detection areas are different from each other in at least one of the object classification table 201 and the motion classification table 301. Further, the plurality of detection areas may be different from each other in at least one selected from the group consisting of a horizontal spread angle, a vertical spread angle, and a depth length.

Fig. 9 is an example of the detection areas. In the example shown in Fig. 9, a detection area 800 has a first area 801, a second area 802, and a third area 803 set therein. The first area 801, the second area 802, and the third area 803 are set in decreasing order of proximity to a place where the security sensor unit 1A is installed.

Since the areas can be made different from each other in at least one of the object classification table 201 and the motion classification table 301, a setting as to whether to activate an alarm can be made so as to vary depending on whether a person X enters the first area 801 of the detection area 800, the second area 802 of the detection area 800, or the third area 803 of the detection area 800, for example.

Alternatively, instead of the areas, time zones in a day or arbitrary dates in a year may be made different from each other in at least one of the object classification table 201 and the motion classification table 301. For example, in a sleeping time zone and a time zone in which a resident is absent, alarming levels of the object classification table 201 and the motion classification table 301 may be set so as to be stricter, that is, so as to activate an alarm more easily; meanwhile, in a time zone in which the resident is at home, the alarming levels thereof may be set so as to be lower.

## Embodiment 3

The following description will discuss details of another embodiment of the present invention. For convenience, members which are identical in function to the members described in the foregoing embodiments are given respective identical reference signs, and descriptions of those members are not repeated.

Fig. 10 is a functional block diagram illustrating a configuration of a main part of a security sensor unit 1B in accordance with the present embodiment. In the present embodiment, a remote setting accepting section (remote setting section) 70 is additionally provided to the above-discussed security sensor unit 1A.

The security sensor unit 1B in accordance with the present embodiment is configured such that an external device 101 is allowed to remotely make a setting of the object classification table 201 and a setting of the motion classification table 301 in the security sensor unit 1B. That is, the remote setting accepting section 70 accepts the settings of the object classification table 201 and the motion classification table 301 from the external device 101 outside the security sensor unit 1B, and transmits the accepted content to the object classification section 20 and the motion classification section 30.

Thanks to the configuration in which the external device 101 is allowed to remotely make a setting of the security sensor unit 1B, it is possible to enhance convenience.

## Software Implementation Example

The functions of the security sensor unit 1 (hereinafter, referred to as a "device") can be realized by a program for causing a computer to function as the device, the program causing the computer to function as control blocks (particularly, the object classification section 20, the motion classification section 30, and the alarming determination section 40) of the device.

In this case, the device includes a computer that has at least one control device (for example, a processor) and at least one memory device (for example, a memory) as hardware for executing the program. The control device and the memory device execute the program, so that the functions described in the foregoing embodiments are realized.

The program can be stored in one or more non-transitory computer-readable recording media. The recording medium can be provided in the device, or the recording medium does not need to be provided in the device. In the latter case, the program can be supplied to the device via any wired or wireless transmission medium.

Some or all of the functions of the control blocks can be realized by a logic circuit. For example, an integrated circuit in which a logic circuit that functions as each of the control blocks is formed is also encompassed in the scope of the present invention. In addition, the function of each of the control blocks can be realized by, for example, a quantum computer.

Further, each of the processes described in the foregoing embodiments can be executed by artificial intelligence (AI). In this case, the AI may be operated by the control device or may be operated by another device (for example, an edge computer and a cloud server).

Aspects of the present invention can also be expressed as follows:

A security sensor unit in accordance with a first aspect of the present invention is a security sensor unit which detects an object having entered a detection area and activates an alarm, the security sensor unit including: a millimeter wave sensor section; an object classification section which classifies a contour of the object in the detection area, the contour having been derived by using an output from the millimeter wave sensor section; a motion classification section which classifies a motion of the object, the motion having been derived by using an output from the millimeter wave sensor section; an alarming determination section which determines, by using classification results given by the object classification section and the motion classification section, whether to activate an alarm; and an alarming section which activates an alarm in accordance with a result given by the alarming determination section.

A security sensor unit in accordance with a second aspect of the present invention is configured such that, in the first aspect, the object classification section uses a height of the object as the contour of the object; and in a case where the object classification section classifies the height of the object as being not less than a first threshold, the alarming determination section determines to activate an alarm irrespectively of the classification result given by the motion classification section.

A security sensor unit in accordance with a third aspect of the present invention is configured such that, in the first or second aspect, in a case where the motion classification section classifies a speed of the object, which speed serves as the motion value of the object, as being less than a second threshold, the alarming determination section determines to activate an alarm.

A security sensor unit in accordance with a fourth aspect of the present invention is configured such that, in any one of the first to third aspects, the object classification section uses a height and a width of the object as the contour of the object; and an administrator is allowed to select, in advance, whether to activate an alarm in a case where the object classification section classifies the height of the object as being not less than a third threshold, which is smaller than the first threshold, and less than the first threshold and classifies the width of the object as being not less than a fourth threshold and less than a fifth threshold.

A security sensor unit in accordance with a fifth aspect of the present invention is configured such that, in any one of the first to fourth aspects, in a case where (a) the object classification section classifies a height of the object as being not less than a sixth threshold and (b) the motion classification section classifies a period, serving as the motion value of the object, in which the object remains in a prescribed first area as being not less than a first period, the alarming determination section determines to activate an alarm.

A security sensor unit in accordance with a sixth aspect of the present invention is configured such that, in the fourth aspect, even in a case where (a) the object classification section classifies the height of the object as being not less than the sixth threshold and (b) the motion classification section classifies the period, serving as the motion value of the object, in which the object remains in the prescribed first area as being not less than a second period, the alarming determination section determines not to activate an alarm, provided that the motion classification section classifies a period in which the object is at a standstill in the first area as being less than the second period.

A security sensor unit in accordance with a seventh aspect of the present invention is configured such that, in the sixth aspect, a selection is allowed to be made as to whether to activate an alarm in a case where the period in which the object is at a standstill in the first area is classified as being less than a third period.

A security sensor unit in accordance with an eighth aspect of the present invention is configured such that, in any one of the first to seventh aspects, the security sensor unit further including: a detection area setting section which sets, as the detection area, a plurality of detection areas which are different from each other in at least one selected from the group consisting of a horizontal spread angle, a vertical spread angle, and a depth length.

A security sensor unit in accordance with a ninth aspect of the present invention is configured such that, in any one of the first to eighth aspects, the security sensor unit further including: a remote setting section with which an external device is allowed to remotely set (a) classification content which is to be used by the object classification section and classification content which is to be used by the motion classification section and (b) the detection area.

A security sensor unit in accordance with a tenth aspect of the present invention is configured such that, in any one of the first to ninth aspects, classification content which is to be used by the object classification section and classification content which is to be use by the motion classification section are allowed to be set such that time zones in a day or arbitrary dates in a year are different from each other in the classification content which is to be used by the object classification section and classification content which is to be use by the motion classification section.

A security sensor unit in accordance with an eleventh aspect of the present invention is configured such that, in any one of the first to tenth aspects, the plurality of detection areas are different from each other in classification content which is to be used by the object classification section and classification content which is to be used by the motion classification section.

A method, in accordance with a twelfth aspect of the present invention, for controlling a security sensor unit is a method for controlling a security sensor unit which detects an object having entered a detection area and activates an alarm, the security sensor unit including a millimeter wave sensor section, the method including: an object classification step of classifying a contour of the object in the detection area, the contour having been derived by using an output from the millimeter wave sensor section; a motion classification step of classifying a motion of the object, the motion having been derived by using an output from the millimeter wave sensor section; an alarming determination step of determining, by using results obtained in the object classification step and the motion classification step, whether to activate an alarm; and an alarming step of activating an alarm in accordance with a result obtained in the alarming determination step.

A security sensor unit in accordance with each aspect of the present invention may be realized by a computer. In this case, the present invention encompasses: a control program for a security sensor unit, the control program causing a computer to function as each of the sections (software elements) included in the security sensor unit so as to realize, by the computer, the security sensor unit 1; and a computer-readable recording medium having the control program stored therein.

The present invention is not limited to the embodiments, but can be altered by a skilled person in the art within the scope of the claims. The present invention also encompasses, in its technical scope, any embodiment derived by combining technical means disclosed in differing embodiments. Further, it is possible to form a new technical feature by combining the technical means disclosed in the respective embodiments.

Reference Signs List

1: security sensor unit
10: millimeter wave sensor section
20: object classification section
201: object classification table
30: motion classification section
301: motion classification table
40: alarming determination section
401: alarming determination table
50: alarming section
60: detection area setting section
70: remote setting accepting section (remote setting section)
101: external device

## Claims

**1.** A security sensor unit which detects an object having entered a detection area and activates an alarm, the security sensor unit comprising:

a millimeter wave sensor section;
an object classification section which classifies a contour of the object in the detection area, the contour having been derived by using an output from the millimeter wave sensor section;
a motion classification section which classifies a motion value indicative of a motion of the object, the motion having been derived by using an output from the millimeter wave sensor section;
an alarming determination section which determines, by using classification results given by the object classification section and the motion classification section, whether to activate an alarm; and
an alarming section which activates an alarm in accordance with a result given by the alarming determination section.

**2.** The security sensor unit according to claim 1, wherein:

the object classification section uses a height of the object as the contour of the object; and
in a case where the object classification section classifies the height of the object as being not less than a first threshold, the alarming determination section determines to activate an alarm irrespectively of the classification result given by the motion classification section.

**3.** The security sensor unit according to claim 1, wherein:
in a case where the motion classification section classifies a speed of the object, which speed serves as the motion value of the object, as being less than a second threshold, the alarming determination section determines to activate an alarm irrespectively of the classification result given by the object classification section.

**4.** The security sensor unit according to claim 2, wherein:

the object classification section uses a height and a width of the object as the contour of the object; and
an administrator is allowed to select, in advance, whether to activate an alarm in a case where the object classification section classifies the height of the object as being not less than a third threshold, which is smaller than the first threshold, and less than the first threshold and classifies the width of the object as being not less than a fourth threshold and less than a fifth threshold.

**5.** The security sensor unit according to claim 1, wherein:
in a case where (a) the object classification section classifies a height of the object as being not less than a sixth threshold and (b) the motion classification section classifies a period, serving as the motion value of the object, in which the object remains in a prescribed first area as being not less than a first period, the alarming determination section determines to activate an alarm.

**6.** The security sensor unit according to claim 5, wherein:
even in a case where (a) the object classification section classifies the height of the object as being not less than the sixth threshold and (b) the motion classification section classifies the period, serving as the motion value of the object, in which the object remains in the prescribed first area as being not less than a second period, the alarming determination section determines not to activate an alarm, provided that the motion classification section classifies a period in which the object is at a standstill in the first area as being less than the second period.

**7.** The security sensor unit according to claim 6, wherein:
a selection is allowed to be made as to whether to activate an alarm in a case where the period in which the object is at a standstill in the first area is classified as being less than a third period.

**8.** The security sensor unit according to claim 1, further comprising:
a detection area setting section which sets, as the detection area, a plurality of detection areas which are different from each other in at least one selected from the group consisting of a horizontal spread angle, a vertical spread angle, and a depth length.

**9.** The security sensor unit according to claim 8, further comprising:
a remote setting section with which an external device is allowed to remotely set (a) classification content which is to be used by the object classification section and classification content which is to be used by the motion classification section and (b) the detection area.

**10.** The security sensor unit according to claim 1, wherein:
classification content which is to be used by the object classification section and classification content which is to be use by the motion classification section are allowed to be set such that time zones in a day or arbitrary dates in a year are different from each other in the classification content which is to be used by the object classification section and classification content which is to be use by the motion classification section.

**11.** The security sensor unit according to claim 8, wherein:
the plurality of detection areas are different from each other in classification content which is to be used by the object classification section and classification content which is to be used by the motion classification section.

**12.** A method for controlling a security sensor unit which detects an object having entered a detection area and activates an alarm, the security sensor unit including a millimeter wave sensor section, the method comprising:

an object classification step of classifying a contour of the object in the detection area, the contour having been derived by using an output from the millimeter wave sensor section;
a motion classification step of classifying a motion of the object, the motion having been derived by using an output from the millimeter wave sensor section;
an alarming determination step of determining, by using results obtained in the object classification step and the motion classification step, whether to activate an alarm; and
an alarming step of activating an alarm in accordance with a result obtained in the alarming determination step.

**13.** A control program for causing a computer to function as a security sensor unit recited in claim 1, the control program causing the computer to function as the object classification section, the motion classification section, and the alarming determination section.

**14.** A computer-readable recording medium having a control program recited in claim 13 stored therein.

FIG. 1

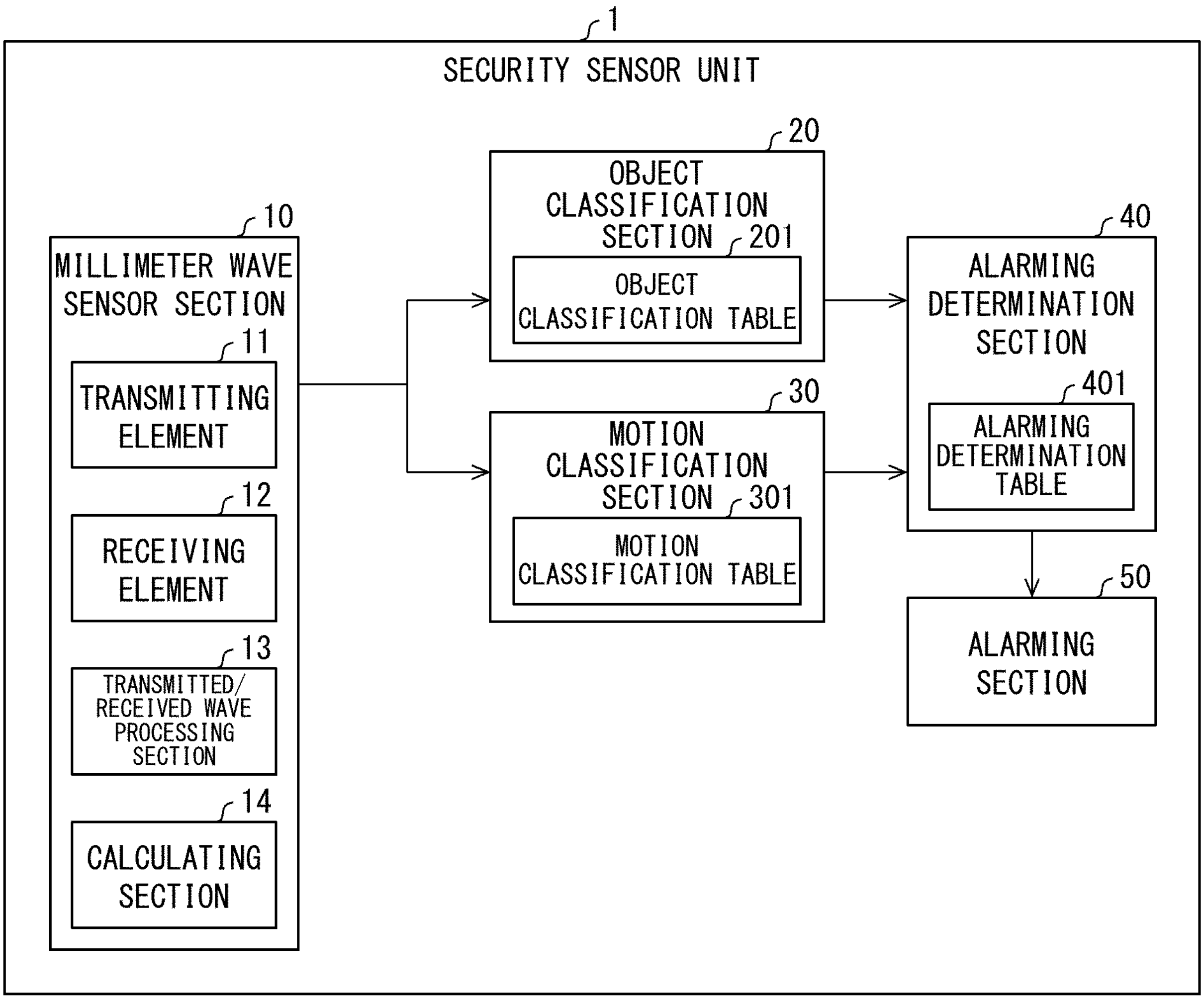
1
SECURITY SENSOR UNIT
10
MILLIMETER WAVE SENSOR SECTION
11
TRANSMITTING ELEMENT
12
RECEIVING ELEMENT
13
TRANSMITTED/ RECEIVED WAVE PROCESSING SECTION
14
CALCULATING SECTION
20
OBJECT CLASSIFICATION SECTION
201
OBJECT CLASSIFICATION TABLE
30
MOTION CLASSIFICATION SECTION
301
MOTION CLASSIFICATION TABLE
40
ALARMING DETERMINATION SECTION
401
ALARMING DETERMINATION TABLE
50
ALARMING SECTION

FIG. 2

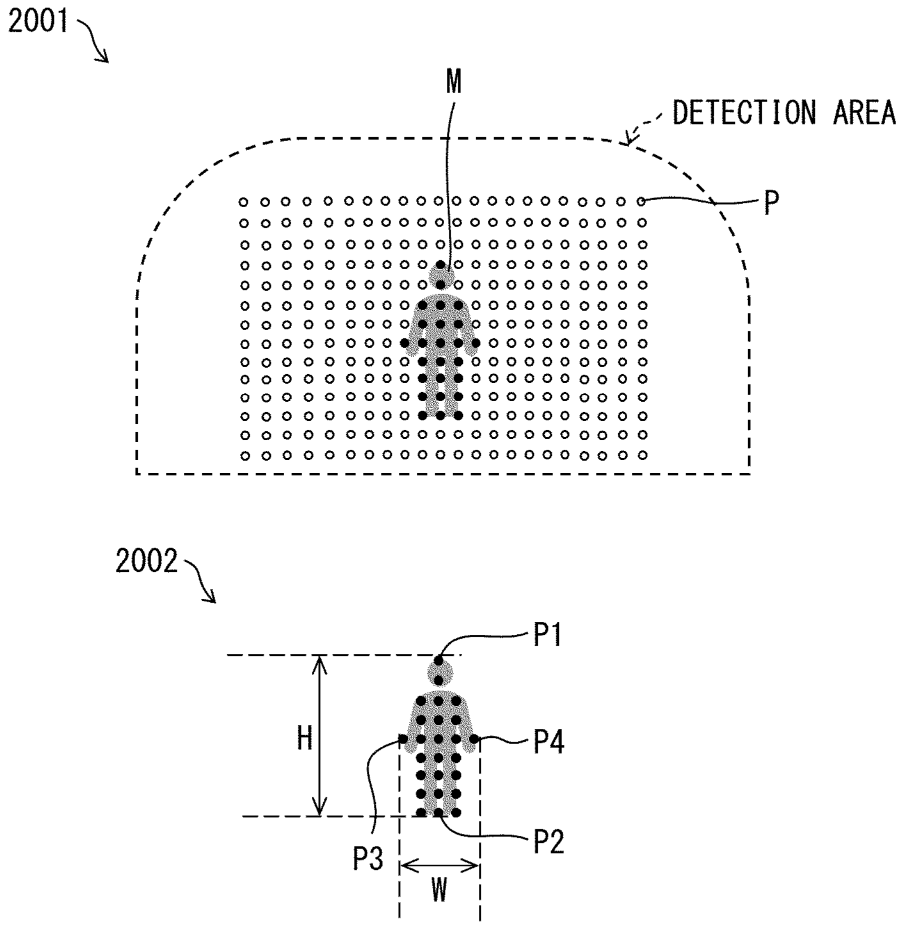

FIG. 3

201A

| | CONTOUR A | CONTOUR B | CONTOUR C | CONTOUR D |
|---|---|---|---|---|
| HEIGHT | LESS THAN 0.5 m | LESS THAN 0.5 m | NOT LESS THAN 0.5 m AND LESS THAN 1.3 m | NOT LESS THAN 1.3 m |
| WIDTH | LESS THAN 0.75 m | NOT LESS THAN 0.75 m | NOT LESS THAN 0.75 m AND LESS THAN 1.3 m | — |

301A

| | SPEED A | SPEED B | SPEED C |
|---|---|---|---|
| SPEED | LESS THAN 0.3 m/s | NOT LESS THAN 0.3 m/s AND LESS THAN 2.0 m/s | NOT LESS THAN 2.0 m/s |

401A

| | SPEED A | SPEED B | SPEED C |
|---|---|---|---|
| CONTOUR A | ACTIVATE ALARM | × | × |
| CONTOUR B | ACTIVATE ALARM | × | × |
| CONTOUR C | ACTIVATE ALARM (SELECTABLE) | ACTIVATE ALARM (SELECTABLE) | ACTIVATE ALARM (SELECTABLE) |
| CONTOUR D | ACTIVATE ALARM | ACTIVATE ALARM | ACTIVATE ALARM |

FIG. 4

| SUBJECT | SMALL ANIMAL | PERSON (CRAWLING, PERPENDICULAR) | PERSON (CRAWLING, OBLIQUE) | PERSON (CRAWLING, TRANSVERSE) | LARGE DOG | PERSON (CROUCHING) | PERSON (WALKING) |
|---|---|---|---|---|---|---|---|
| | 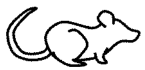 | 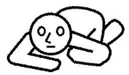 | 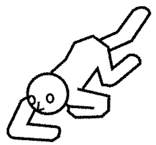 | 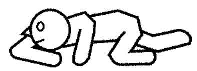 | 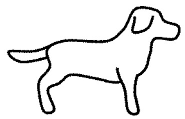 | 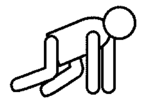 | 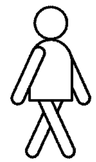 |
| HEIGHT | LOW | LOW | LOW | LOW | MIDDLE | MIDDLE | HIGH |
| WIDTH | SMALL | SMALL | MIDDLE | LARGE | MIDDLE | MIDDLE | SMALL |
| SPEED | FAST | SLOW | SLOW | SLOW | SLOW TO FAST | SLOW TO FAST | SLOW TO FAST |
| ALARM ACTIVATION | × | ○ | ○ | ○ | ○ (SELECTABLE) | ○ (SELECTABLE) | ○ |
| CONVENTIONAL (REFERENCE) | × | × | × | × | ○ | ○ | ○ |

FIG. 5

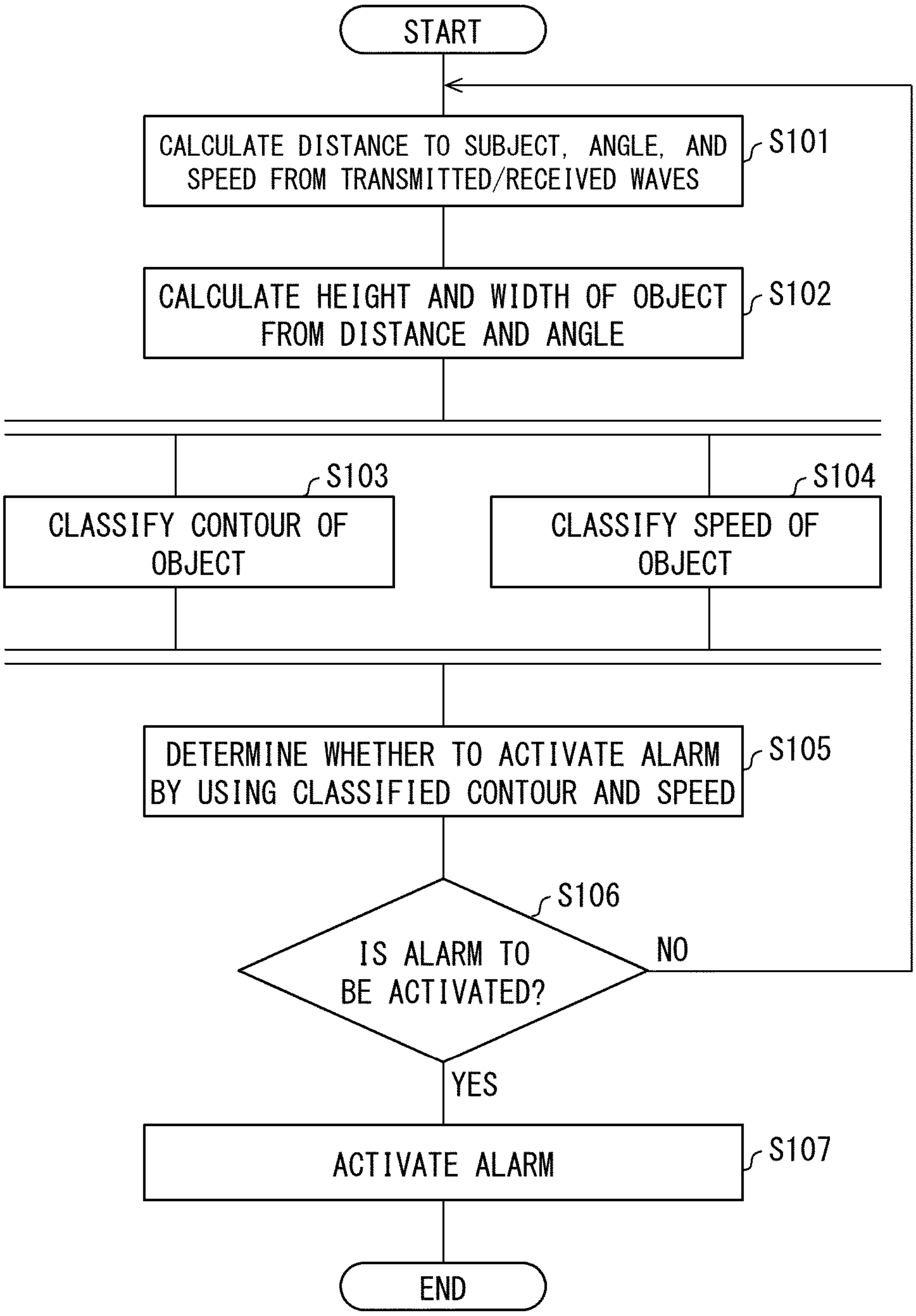
START
CALCULATE DISTANCE TO SUBJECT, ANGLE, AND SPEED FROM TRANSMITTED/RECEIVED WAVES
S101
CALCULATE HEIGHT AND WIDTH OF OBJECT FROM DISTANCE AND ANGLE
S102
S103
CLASSIFY CONTOUR OF OBJECT
S104
CLASSIFY SPEED OF OBJECT
DETERMINE WHETHER TO ACTIVATE ALARM BY USING CLASSIFIED CONTOUR AND SPEED
S105
S106
IS ALARM TO BE ACTIVATED?
NO
YES
ACTIVATE ALARM
S107
END

# FIG. 6

201B

| | CONTOUR A | CONTOUR B |
|---|---|---|
| HEIGHT | LESS THAN 0.5 m | NOT LESS THAN 0.5 m |

301B

| | TIME A | TIME B | TIME C |
|---|---|---|---|
| STAY PERIOD | LESS THAN 30 s | NOT LESS THAN 30 s | NOT LESS THAN 30 s |
| STANDSTILL PERIOD | — | LESS THAN 15 s | NOT LESS THAN 15 s |

401B

| | TIME A | TIME B | TIME C |
|---|---|---|---|
| CONTOUR A | × | × | × |
| CONTOUR B | × | ACTIVATE ALARM (SELECTABLE) | ACTIVATE ALARM |

# FIG. 7

| SUBJECT | SMALL ANIMAL | STRAYING | PASSING THROUGH | VIEWING, SUSPICIOUS PERSON |
|---|---|---|---|---|
| | 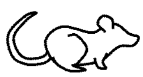 | 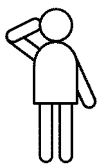 | 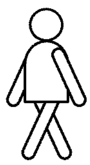 | 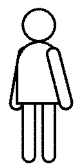 |
| HEIGHT | LOW | HIGH | HIGH | HIGH |
| STAY PERIOD | IRREGULAR | SHORT | LONG | LONG |
| STANDSTILL PERIOD | IRREGULAR | SHORT | SHORT | LONG |
| ALARM ACTIVATION | × | × | ○ (SELECTABLE) | ○ |
| CONVENTIONAL (REFERENCE) | × | ○ | ○ | ○ |

FIG. 8

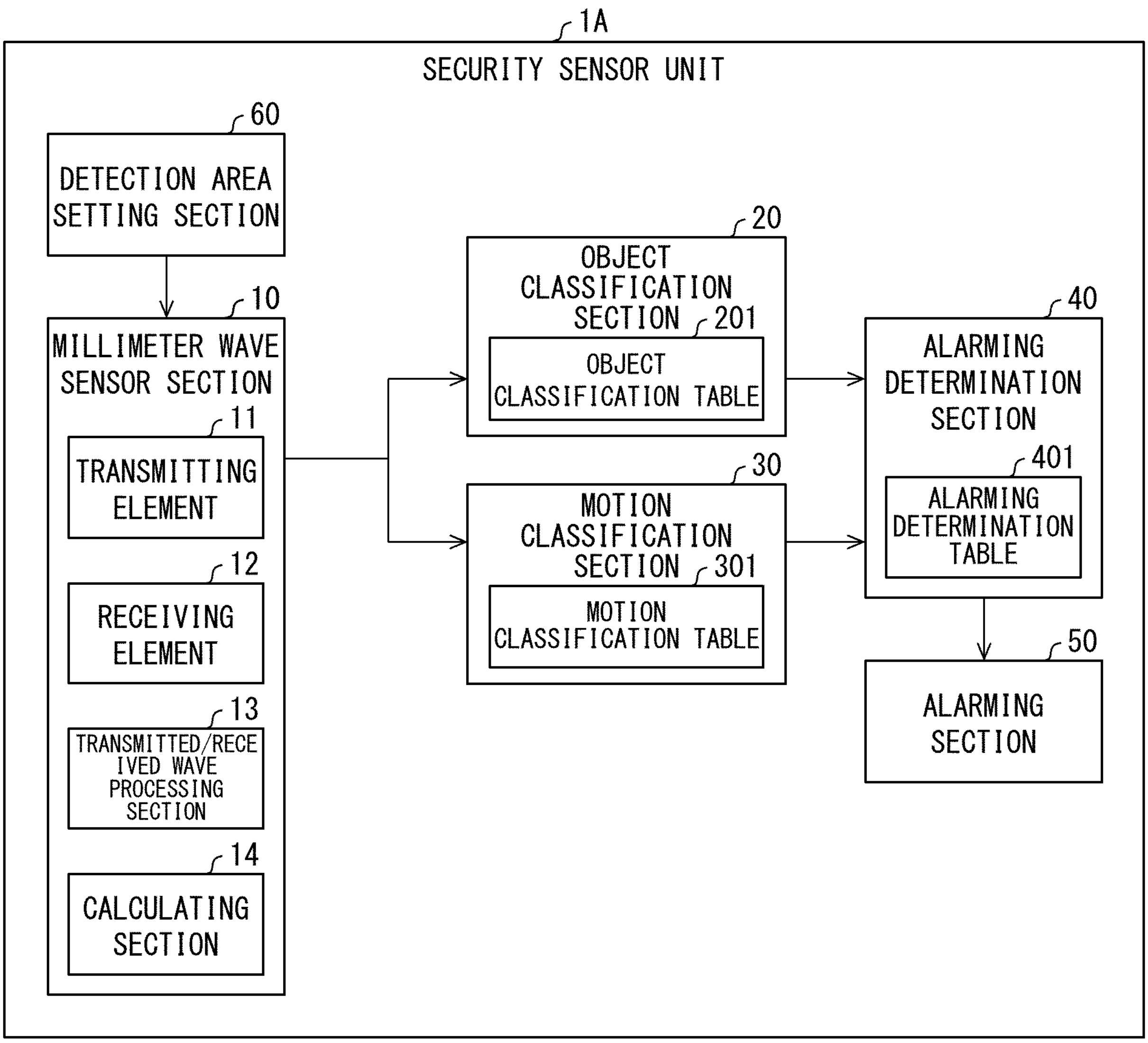
1A
SECURITY SENSOR UNIT
60
DETECTION AREA SETTING SECTION
10
MILLIMETER WAVE SENSOR SECTION
11
TRANSMITTING ELEMENT
12
RECEIVING ELEMENT
13
TRANSMITTED/RECEIVED WAVE PROCESSING SECTION
14
CALCULATING SECTION
20
OBJECT CLASSIFICATION SECTION
201
OBJECT CLASSIFICATION TABLE
30
MOTION CLASSIFICATION SECTION
301
MOTION CLASSIFICATION TABLE
40
ALARMING DETERMINATION SECTION
401
ALARMING DETERMINATION TABLE
50
ALARMING SECTION

FIG. 9

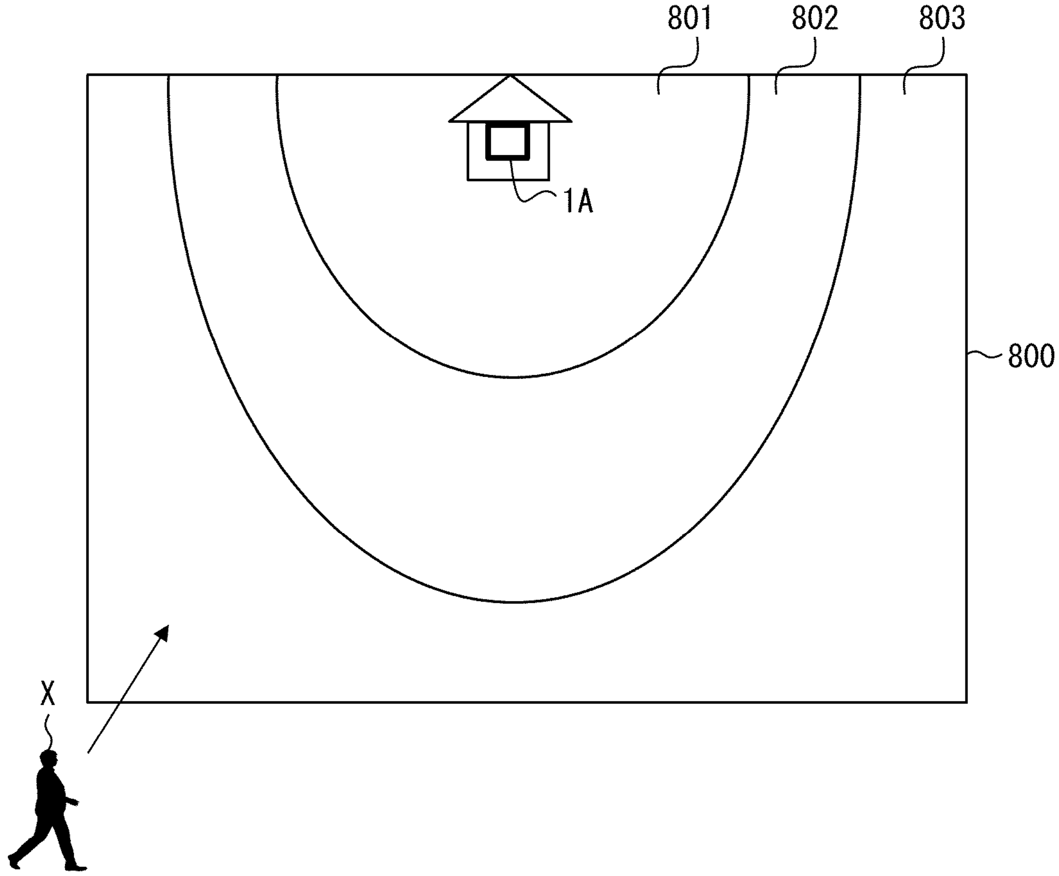

FIG. 10

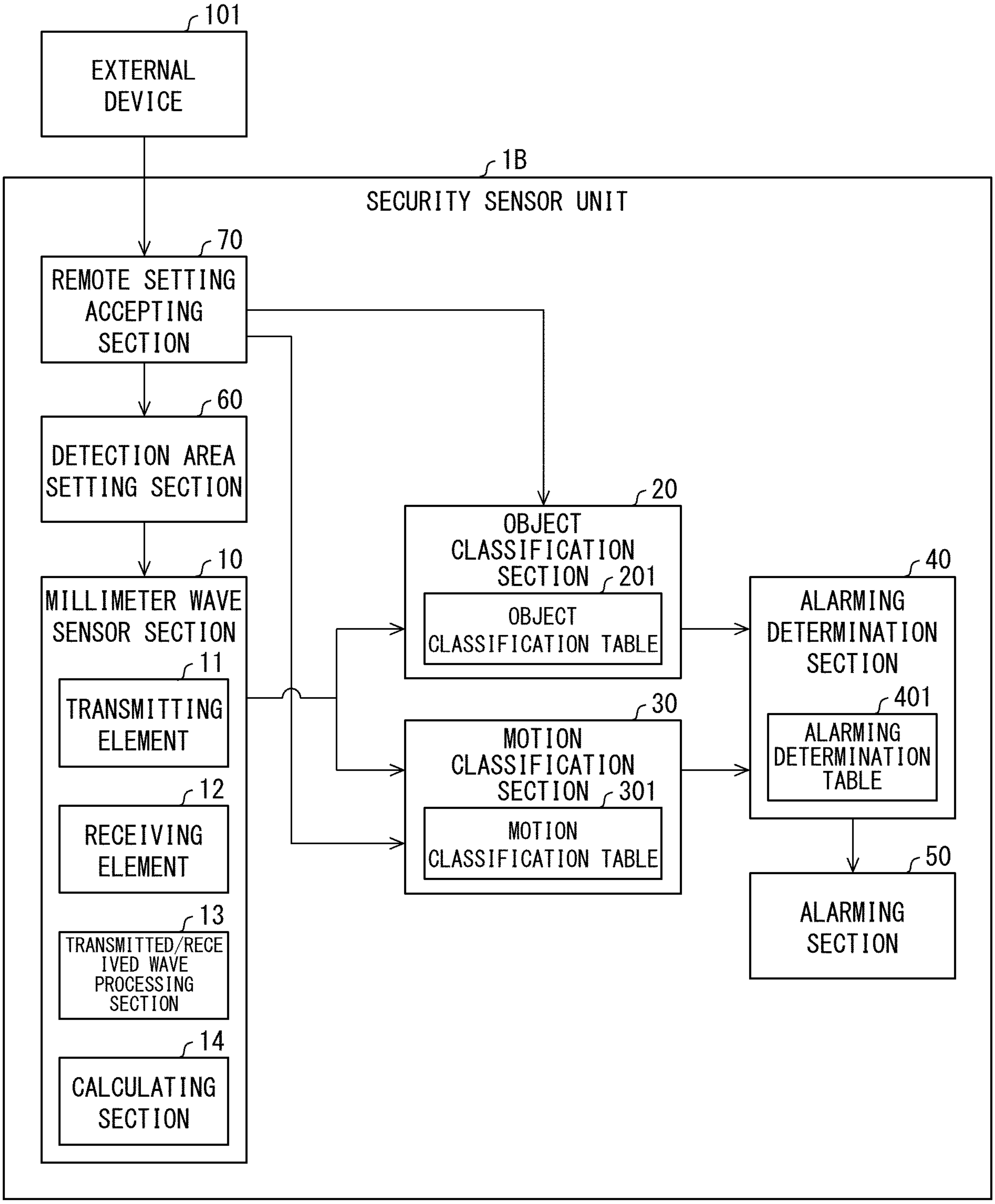
101
EXTERNAL DEVICE
1B
SECURITY SENSOR UNIT
70
REMOTE SETTING ACCEPTING SECTION
60
DETECTION AREA SETTING SECTION
10
MILLIMETER WAVE SENSOR SECTION
11
TRANSMITTING ELEMENT
12
RECEIVING ELEMENT
13
TRANSMITTED/RECEIVED WAVE PROCESSING SECTION
14
CALCULATING SECTION
20
OBJECT CLASSIFICATION SECTION
201
OBJECT CLASSIFICATION TABLE
30
MOTION CLASSIFICATION SECTION
301
MOTION CLASSIFICATION TABLE
40
ALARMING DETERMINATION SECTION
401
ALARMING DETERMINATION TABLE
50
ALARMING SECTION

## INTERNATIONAL SEARCH REPORT

International application No.
**PCT/JP2022/046333**

**A. CLASSIFICATION OF SUBJECT MATTER**

***G08B 13/181***(2006.01)i
FI: G08B13/181

According to International Patent Classification (IPC) or to both national classification and IPC

**B. FIELDS SEARCHED**

Minimum documentation searched (classification system followed by classification symbols)

G08B13/181; H04N7/18; G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2013-61187 A (OPTEX CO LTD) 04 April 2013 (2013-04-04) paragraphs [0015], [0024], [0041], fig. 1, 3-6 | 1-2, 5, 8-14<br>3-4, 6-7 |
| Y | JP 2002-83383 A (MATSUSHITA ELECTRIC WORKS LTD) 22 March 2002 (2002-03-22) paragraphs [0001], [0019], [0021], [0045]-[0048] | 1-2, 5, 8-14 |
| Y<br>A | JP 2017-085653 A (OMRON CORPORATION) 18 May 2017 (2017-05-18) paragraphs [0130]-[0136], fig. 9 | 8-9, 11<br>3 |
| Y | JP 09-330415 A (HITACHI LTD) 22 December 1997 (1997-12-22) paragraphs [0055]-[0058] | 10 |
| A | US 2006/0179463 A1 (CHISHOLM, Alpin C. et al.) 10 August 2006 (2006-08-10) paragraphs [0167]-[0168], [0176]-[0177] | 4 |
| A | JP 2022-175631 A (PANASONIC IP MAN CORP) 25 November 2022 (2022-11-25) paragraphs [0084], [0117]-[0118], fig. 8 | 6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/046333**

| Patent document cited in search report | Publication date (day/month/year) | Patent family member(s) | Publication date (day/month/year) |
|---|---|---|---|
| JP 2013-61187 A | 04 April 2013 | JP 5163971 B1 | |
| | | EP 2741111 A1 paragraphs [0015], [0024], [0041], fig. 1, 3-6 | |
| | | US 9140793 B2 | |
| | | WO 2013/039085 A1 | |
| JP 2002-83383 A | 22 March 2002 | (Family: none) | |
| JP 2017-085653 A | 18 May 2017 | JP 2014-523716 A | |
| | | US 2013/0094705 A1 paragraphs [0142]-[0148], fig. 9 | |
| | | JP 2015-501578 A | |
| | | JP 2016-171575 A | |
| | | US 2016/0203371 A1 | |
| | | WO 2013/056016 A1 | |
| | | EP 2754125 A1 | |
| | | CN 107093192 A | |
| JP 09-330415 A | 22 December 1997 | (Family: none) | |
| US 2006/0179463 A1 | 10 August 2006 | WO 2006/086239 A2 | |
| JP 2022-175631 A | 25 November 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11079482 B
- JP 3086406 B
- JP 2013061187 A
- JP H11154286 B